# EUROPÄISCHE PATENTSCHRIFT

(11) **EP 3 175 545 B1**
(45) Veröffentlichungstag und Bekanntmachung des Hinweises auf die Patenterteilung: **02.10.2019**
(21) Anmeldenummer: 15744905.9
(22) Anmeldetag: 29.07.2015
(51) Int. Cl.: H02P 25/08

(54) **VERFAHREN ZUR MOTORSTEUERUNG EINES SYNCHRON-RELUKTANZMOTORS FÜR EINE PUMPE UND PUMPE MIT SYNCHRON-RELUKTANZMOTOR**
METHOD FOR MOTOR CONTROL OF A SYNCHRONOUS RELUCTANCE ELECTRIC MACHINE FOR A PUMP WITH A SYNCHRONOUS RELUCTANCE ELECTRIC MACHINE
PROCÉDÉ DE COMMANDE DE MOTEUR D'UNE MACHINE ÉLECTRIQUE À RÉLUCTANCE SYNCHRONE POUR UNE POMPE AVEC UNE MACHINE ÉLECTRIQUE À RÉLUCTANCE SYNCHRONE

(30) Priorität: 30.07.2014 DE 102014214952
(43) Veröffentlichungstag der Anmeldung: 07.06.2017
(73) Patentinhaber: KSB SE & Co. KGaA, 67227 Frankenthal (DE)
(72) Erfinder: GONTERMANN, Daniel, 67227 Frankenthal (DE); SCHAAB, Jochen, 67227 Frankenthal (DE)
(86) Internationale Anmeldenummer: PCT/EP2015/067380
(87) Internationale Veröffentlichungsnummer: WO 2016/016304

(56) Entgegenhaltungen:
- EP-A1- 0 812 052
- WO-A1-2005/050021
- DE-A1- 4 113 068
- DE-A1-102011 086 572

## Beschreibung

Die Erfindung betrifft ein Verfahren zur Motorsteuerung eines Synchron-Reluktanzmotors für eine Pumpe, insbesondere eine Kreiselpumpe, mit einem Frequenzumrichter. Daneben betrifft die Erfindung eine Pumpe zur Ausführung des Verfahrens.

Die WO 2005/050021 A1 offenbart ein Verfahren zur Steuerung eines Antriebsmotors einer Vakuum-Verdrängerpumpe mit einem Zusammenhang zwischen der Prozessgröße Druck zur Drehzahl.

Die DE 10 2011 086 572 A1 zeigt ein Verfahren und eine Regelvorrichtung zur drehzahlvariablen Regelung eines Verdrängerpumpenaggregates, das ohne Verwendung von Sensoren auf den Sollwert geregelt wird.

Die EP 0 812 052 A1 offenbart einen Frequenzumrichter für eine Antriebsvorrichtung, der in einen Wechselstrommotor ohne wesentliche bauliche Veränderungen desselben integrierbar sein soll.

Die DE 41 13 068 A1 zeigt ein Verfahren zur Ermittlung oder Regelung der Drehzahl einer Asynchronmaschine, bei dem die Ist-Drehzahl des Rotors der Asynchronmaschine dadurch ermittelt wird, daß der Übergangsbreich vom Motor- auf den Generatorbetrieb oder umgekehrt festgestellt wird. Die so ermittelte Ist-Drehzahl wird für die Drehzahlregelung der Maschine verwendet.

Die DE 29 39 090 A1 offenbart ein Verfahren und eine Anordnung zur Steuerung oder Regelung der Drehzahl von Asynchron- oder Reluktanz-Motoren.

Die DE 18 06 838 zeigt eine Schaltungsanordnung zur Steuerung der Drehzahl eines von einem statischen Umrichter gespeisten Wechselstrommotors.

Die DE 103 43 460 A1 offenbart eine Vorrichtung zum Spinnen und Aufwickeln zumindest eines synthetischen Fadens. Dabei weist ein Steuergerät ein veränderbares Spannungs/Hertz-Verhältnis auf.

Die DE 20 2005 001 746 U1 zeigt eine Vorrichtung zum Steuern einer Strömungsarbeitsmaschine. Die Veränderung der Drehzahl eines Drehstromasynchronmotors ist durch Veränderung einer Netzfrequenz mittels eines Frequenzumrichters durchführbar.

Zum stabilen Betrieb von Synchron-Reluktanzmotoren werden heute Frequenzumrichter eingesetzt, die mit einer vektororientierten Regelung arbeiten. Kennzeichnend für die Kombination von Motor und Leistungselektronik ist, dass der Motor einen Rotor mit einem Flusssperrenabschnitt aufweist und das Drehmoment mittels der sogenannten Reluktanzkraft aufgrund der Anisotropie des magnetischen Widerstandes längs des Umfangs entsteht.

Bei derartigen Motorkonstruktionen tritt zwar während des Motorbetriebs kein Schlupf auf, jedoch gilt ein lastabhängiger Polradwinkel, der ein bestimmtes Maximum nicht überschreiten darf, da ansonsten die Gefahr besteht, dass der Motor außer Tritt fällt und zum Stillstand kommt.

Zur energieoptimalen Regelung wird über den Umrichter daher die flussbildende und drehmomentbildende Komponente des Stroms getrennt voneinander geregelt, und zwar in Abhängigkeit der Rotorlage. Die Lage kann einerseits mit Sensoren bestimmt werden oder alternativ sensorlos auf Grundlage diverser Verfahren, so zum Beispiel die Inform-Methode nach Schrödel, die Injections-Methode gemäß REEL oder gemäß der Arbitrary-Injection-Methode der TU-München, Kennel.

Die genannten Verfahren verzichten zwar auf den Einsatz von Sensoren zur Rotorlagenmessung und reduzieren damit die Fehleranfälligkeit des Systems, jedoch erfordert diese Vorgehensweise eine aufwändige Analyse der Messgrößen. Für die Messung der Rotorlage mittels des Umrichters sind mindestens zwei Strommessungen am Ausgang des Umrichters notwendig, um auf Grundlage der ermittelten Stromwerte die aktuelle Motorlage zu bestimmen. Darüber hinaus benötigt der Umrichter eine hohe Rechenleistung zur Modellbildung. Zu diesem Zweck ist der Umrichter in der Regel mit einem digitalen Signalprozessor (DSP) hardwaretechnisch ausgestattet.

Der Einsatz derartiger DSPs ist jedoch teuer und treibt folglich die Kosten für die Motorsteuerung und die Endanwendung, beispielsweise eine Pumpe, in die Höhe.

Die Idee der vorliegenden Erfindung besteht nun darin, den Aufwand im Umrichter zur Ansteuerung eines Synchron-Reluktanzmotors für eine Pumpe deutlich zu reduzieren.

Diese Aufgabe wird durch ein Verfahren gemäß den Merkmalen des Anspruchs 1 gelöst. Vorteilhafte Ausgestaltungen des Verfahrens sind Gegenstand der sich an den Hauptanspruch anschließenden Unteransprüche.

Gemäß Anspruch 1 wird ein Verfahren zur Motorsteuerung eines Synchron-Reluktanzmotors für eine Pumpe, insbesondere eine Kreiselpumpe, unter Verwendung eines Frequenzumrichters vorgeschlagen. Erfindungsgemäß wird der Synchron-Reluktanzmotor durch den Frequenzumrichter im U/f-Betrieb gesteuert. Der Motor wird folglich nicht mehr wie bisher geregelt in Abhängigkeit der Stromgrößen betrieben, sondern stattdessen lediglich gesteuert, insbesondere mittels eines offenen Regelkreises gesteuert. Aufgrund der U/f-Steuerung des Synchron-Reluktanzmotors kann die bisher erforderliche Strommessung und die damit verbundene Berechnung des Motormodells entfallen. Auf den Einsatz hochwertiger DSPs kann verzichtet werden und eine kostengünstigere Umrichteralternative verbaut werden.

Für eine optimale Steuerung ist es sinnvoll, das Verhältnis von Spannung und Frequenz zur Optimierung der Magnetisierung der Synchron-Reluktanzmaschine im Hinblick auf hohe Energieeffizienz an das vorhersehbare Lastverhalten anzupassen. Demnach wird die für den U/f-Betrieb erforderliche Kennlinie in Abhängigkeit der Pumpenanwendung erstellt, um eine möglichst energieeffiziente und wirkungsvolle Ansteuerung der Synchron-Reluktanzmaschine zu erreichen.

Idealerweise weist das U/f-Verhältnis einen statisch-quadratischen Zusammenhang auf, und zwar derart, sodass die Überwindung des Anlaufmomentes sichergestellt und bei kleinen Drehzahlen der Synchron-Reluktanzmaschine keine energieaufwändige Übermagnetisierung des Motors hervorgerufen wird. Ein entsprechendes Verhältnis ist insbesondere dann sinnvoll, wenn sich die Pumpenanwendung durch eine geringe Dynamik auszeichnet, d.h. insbesondere bei Anwendungen, die sich lediglich durch kleine Veränderungen des Drehmoments innerhalb kurzer Zeitspannen auszeichnen. In diesem Fall unterliegt das Verhältnis von Drehmomentbedarf und Drehzahl einem quadratischen Zusammenhang, weshalb auch für das U/f-Verhältnis des Umrichters ein entsprechender Zusammenhang definiert werden kann.

Erfindungsgemäß wird die Solldrehzahl für den U/f-Umrichter in Abhängigkeit der tatsächlichen Motordrehzahl und/oder einer indirekt über die Motordrehzahl geregelte Prozessgröße der Pumpenanwendung bestimmt. Die Solldrehzahl dient als Vorgabe für den U/f-Umrichter, der in Abhängigkeit der Solldrehzahl das passende U/f-Verhältnis bestimmt. Aus der Sollfrequenz und Spannungshöhe werden die entsprechenden pulsweitenmodulierten Spannungsimpulse zur Ansteuerung des Wechselrichters im PWM-Modulator erzeugt.

Aufgrund der U/f-Steuerung des Synchron-Reluktanzmotors ist die Stabilität des Betriebs des Motors, insbesondere bei schnellen Lastwechseln, erheblich reduziert und es besteht die Gefahr eines Außertrittfallens des Rotors aufgrund einer Überschreitung des maximalen Polradwinkels. Ein Außertrittfallen des Motors zeigt sich durch eine Anomalie der Motordrehzahl bzw. einer indirekt durch die Motordrehzahl geregelten Prozessgröße der Pumpe, beispielsweise des Ausgangsdrucks. Im Falle eines Außertrittfallens des Rotors besteht daher die Möglichkeit, dies über die Veränderung der indirekt über die Drehzahl des Umrichters geregelten Prozessgröße zu erkennen und den regulären Motorbetrieb über einen Neustart aus dem Stillstand wieder aufzunehmen. Dabei wird die Ansteuerung des Synchron-Reluktanzmotors solange ausgesetzt, bis ein Stillstand des Motors sichergestellt ist.

Für den Fall, dass die indirekt geregelte Prozessgröße ein gemessener Druck ist, wird bevorzugt der Differenzdruck gemessen, insbesondere zwischen End- und Saugdruck der Pumpe. Idealerweise wird der Druck am Druckstutzen der Pumpe und/oder in einer Druckleitung nahe der Pumpe und/oder am Schlechtpunkt eines Heizungssystems, in dem die Pumpe eingesetzt wird, gemessen.

Neben dem erfindungsgemäßen Verfahren betrifft die vorliegende Erfindung ebenfalls eine Pumpe, insbesondere eine Kreiselpumpe, mit wenigstens einem Synchron-Reluktanzmotor und einem Frequenzumrichter zur Motorsteuerung. Erfindungsgemäß ist der verwendete Frequenzumrichter der Pumpe ein U/f-Umrichter. Anstatt der Verwendung eines hochwertigen DSPs zur Regelung eines Synchron-Reluktanzmotors wird stattdessen ein kostengünstigerer U/f-Umrichter verwendet, der lediglich eine Steuerung des Synchron-Reluktanzmotors vornimmt. Die Vorteile und Eigenschaften der erfindungsgemäßen Pumpe entsprechen offensichtlich denen des erfindungsgemäßen Verfahrens, weshalb an dieser Stelle auf eine wiederholende Beschreibung verzichtet werden soll.

Der verwendete U/f-Umrichter kann dabei intern in die Pumpe integriert oder als externer U/f-Umrichter mit dieser verbunden sein.

Insbesondere weist die Pumpe Mittel zur Durchführung des erfindungsgemäßen Verfahrens auf, beispielsweise einen Differenzdruckgeber bzw. Kommunikationsmittel zur Kommunikation mit einem externen Differenzdruckgeber. Eine Auswerteeinheit kann in Abhängigkeit des erfassten Differenzdruckes eine entsprechende Solldrehzahl für den U/f-Umrichter der Pumpe erzeugen.

Weiterhin ist die Erfindung auf die Verwendung eines U/f-Umrichters für die Ansteuerung eines Synchron-Reluktanzmotors, vorzugsweise einer Synchron-Reluktanzmaschine zum Antrieb einer Pumpe, insbesondere einer Pumpe gemäß der vorliegenden Erfindung, gerichtet.

Die Erfindung betrifft auch die Verwendung einer Pumpe gemäß der vorliegenden Erfindung als Heizungsumwälzpumpe und/oder Brauchwasserzirkulationspumpe und/oder Nassläufer. Generell lässt sich die erfindungsgemäße Pumpe bei Anwendungen einsetzen, die sich durch eine geringe Dynamik des Lastverhaltens auszeichnen und zudem lediglich ein geringes Anlaufdrehmoment benötigen.

Insbesondere bei den Anwendungen Heizen/Kühlen ist eine kurze Betriebsunterbrechung aufgrund der relativ langsamen Temperaturänderungen unkritisch. Daher kann der mit der vereinfachten Lösung gegenüber der herkömmlichen Ansteuerung eines Synchron-Reluktanzmotors bei Pumpen instabilere Motorbetrieb ohne massive Einschränkung in Kauf genommen werden. Die Lösung gemäß der vorliegenden Erfindung wird damit günstiger.

Weitere Vorteile und Eigenschaften der Erfindung sollen im Folgenden anhand eines in den Zeichnungen dargestellten Ausführungsbeispiels näher erläutert werden. Es zeigen:
- Figur 1:: ein Blockschaltbild einer Motorregelung eines Synchron-Reluktanzmotors für eine Pumpe nach dem Stand der Technik,
- Figur 2:: ein Blockschaltbild der erfindungsgemäßen Motorsteuerung eines Synchron-Reluktanzmotors für eine Pumpe und
- Figur 3:: ein mögliches Kennlinienfeld für eine U/f-Steuerung eines Synchron-Reluktanzmotors für eine Pumpe.

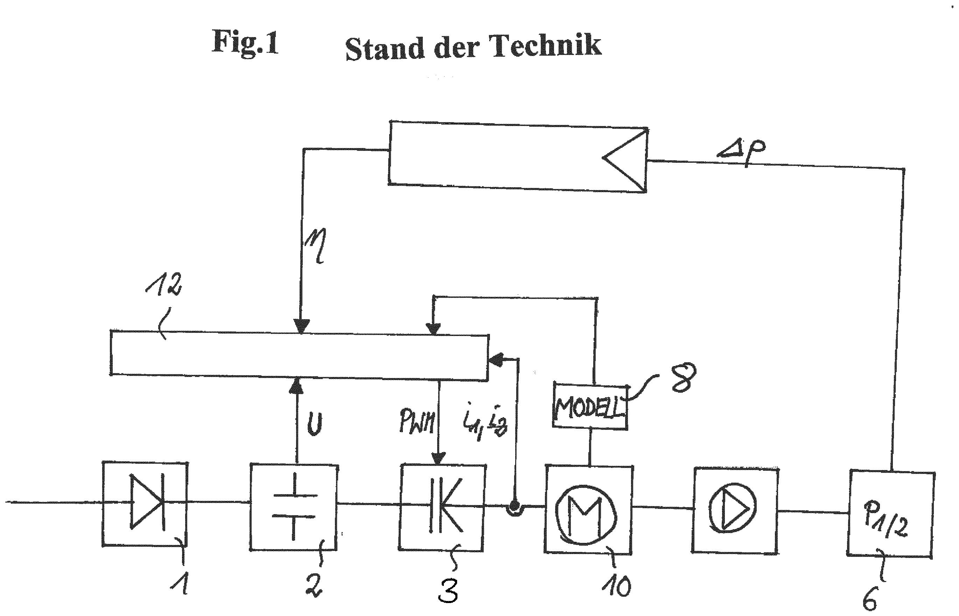

Figur 1 zeigt ein Blockschaltbild einer konventionellen Motorregelung eines Synchron-Reluktanzmotors 10 zum stabilen Betrieb gemäß dem Stand der Technik. Die am Synchron-Reluktanzmotor 10 anliegende Wechselspannung wird im Block 1 gleichgerichtet und mittels des Kondensators 2 geglättet. Der DSP 12 des Frequenzumrichters erhält als Eingangsgrößen die gleichgerichtete Spannung U sowie die vom Block 7 bereitgestellte Solldrehzahl η, die im Block 7 anhand des gemessenen Differenzdruckes Δp bestimmt wird. Der Differenzdruck Δp wird durch den Differenzdruckgeber 6 gemessen.

Weiterhin empfängt der DSP 12 als Eingangsgröße zwei gemessene Stromkomponenten i₁, i₂, die am Ausgang des Umrichters, d. h. am Eingang des Synchron-Reluktanzmotors 10 gemessen werden. Durch die gemessenen Stromgrößen i₁, i₂ kann die Position des Rotors sensorlos im DSP 12 berechnet werden. Dazu ist jedoch als weitere Eingangsgröße das Motormodell 8 notwendig.

Als Ausgangsignal sendet der DPS 12 das geregelte PWM-Signal an den Wechselrichter 3 des Synchron-Reluktanzmotors 10, wobei das PWM-Signal offensichtlich in Abhängigkeit der erfassten Ströme i₁, i₂ sowie der Motorspannung U und der Solldrehzahl η geregelt wird.

Für die Implementierung des Frequenzumrichters gemäß Figur 1 ist ein hochwertiger DSP 12 mit ausreichender Rechenleistung erforderlich.

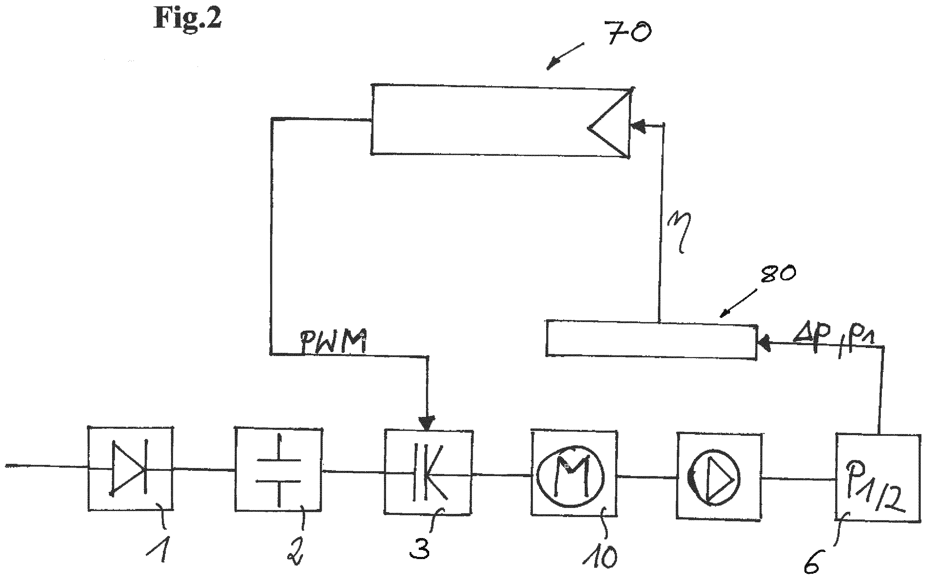

Figur 2 zeigt das erfindungsgemäße Verfahren zur Ansteuerung eines Synchron-Reluktanzmotors 10 für eine Pumpe. Gleiche Komponenten der Figuren 1, 2 sind mit gleichen Bezugszeichen versehen. In der erfindungsgemäßen Ausführung ist auf den kostenintensiven DSP 12 verzichtet worden, da die Motorsteuerung lediglich im U/f-Betrieb erfolgt. Dies bedeutet, dass der Synchron-Reluktanzmotor 10 durch den verwendeten U/f-Umrichter lediglich angesteuert wird. Auf die Bestimmung der Rotorlage wird in diesem Betrieb vollständig verzichtet. Es entfällt folglich die Strommessung und die Berechnung des Motormodells wie sie in Figur 1 gezeigt ist. Der Frequenzumrichter 70 erhält eine in Abhängigkeit eines gemessenen Differenzdruckes Δp bzw. eines einzelnen Druckwertes p₁ im Block 80 bestimmte Solldrehzahl η. Ausgehend von der Solldrehzahl η wird ein PWM Signal gemäß einer U/f-Kennlinie erzeugt und für die Steuerung der Synchron-Reluktanzmaschine 40 herangezogen.

Das in Figur 2 gezeigte Steuerungsverfahren kann insbesondere bei Kreiselpumpen Anwendung finden, da diese aus antriebstechnischer Sicht als gutmütige Komponente mit geringem Anlaufmoment und geringer Dynamik, d.h. nur kleinen Veränderung des Drehmomentes innerhalb kurzer Zeitspannen, gelten. Zudem unterliegt das Verhältnis von Drehmomentbedarf und Drehzahl einem quadratischen Zusammenhang. Dies eröffnet die Möglichkeit, das U/f-Verhältnis des Umrichters 70 auf einen statischen quadratischen Zusammenhang festzulegen, sodass die Überwindung des Anlaufmomentes sichergestellt ist, bei kleinen Drehzahlen jedoch keine energieaufwändige Übermagnetisierung im Motor hervorgerufen wird.

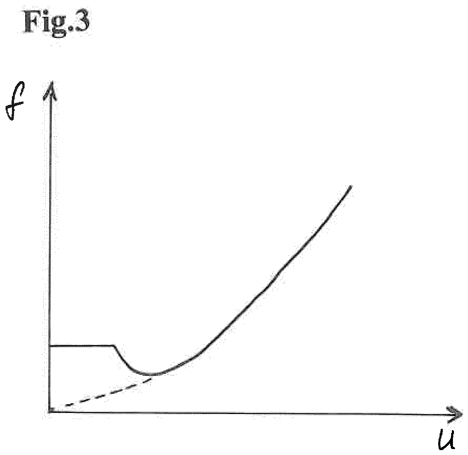

Ein Beispiel für eine entsprechende U/f-Kennlinie ist in der Figur 3 gezeigt. Die Abweichung vom quadratischen Zusammenhang bei geringen Drehzahlen wird als sogenannter Boost-Vorgang bezeichnet, um einen stabilen Betrieb auch bei geringen Drehzahlen zu ermöglichen.

In der Regel dient der Umrichter in der Kreiselpumpenanwendung nicht zur Drehzahlregelung zum Selbstzweck, sondern zur Implementierung einer Druckregelung. Der Druck wird über einen Drucksensor 6 am Druckstutzen oder in der Druckleitung nahe der Pumpe oder am Schlechtpunkt gemessen. Im unwahrscheinlichen Fall eines Außertrittfallens des Rotors durch eine Drehmomentschwankung, beispielsweise durch Schmutz im Fördermedium, stellt der Umrichter 70 den Druckabfall fest und schaltet den Motor 10 kurz ab. In diesem Fall bremst das Fördermedium den Motor 10 stark ab und bringt diesen nach kurzer Zeit zum Stillstand. Nach dieser kurzen, vorab definierten Zeit erfolgt der Neustart aus dem Stillstand. Insbesondere in den Anwendungen Heizen/Kühlen ist eine kurze Betriebsunterbrechung aufgrund der relativ langsamen Temperaturänderungen unkritisch.

Die in Figur 2 gezeigte Motorsteuerung wird vorzugsweise bei Heizungsumwälzpumpen, Brauchwasserzirkulationspumpen oder Nassläufern eingesetzt.

## Patentansprüche

1. Verfahren zur Motorsteuerung eines Synchron-Reluktanzmotors (10) für eine Pumpe, insbesondere Kreiselpumpe, mit einem Frequenzumrichter (70),
**dadurch gekennzeichnet, dass**
der Frequenzumrichter (70) den Synchron-Reluktanzmotor (10) im U/f-Betrieb steuert, wobei die Soll-Drehzahl für den U/f-Umrichter in Abhängigkeit der tatsächlichen Motordrehzahl und/oder einer indirekt über die Motordrehzahl geregelten Prozessgröße der Pumpenanwendung bestimmt wird, wobei der U/f-Umrichter die Ansteuerung des Synchron-Reluktanzmotors (10) für einen definierten Zeitraum unterbricht, wenn ein Außertrittfallen des Motors anhand der tatsächlichen Motordrehzahl und/oder der indirekt geregelten Prozessgröße erkannt wird.

2. Verfahren nach Anspruch 1, **dadurch gekennzeichnet, dass** der U/f-Umrichter im offenen Regelkreis arbeitet.

3. Verfahren nach Anspruch 1 oder 2, **dadurch gekennzeichnet, dass** das Verhältnis von Spannung zu Frequenz des U/f-Umrichters an die Anwendung des Synchron-Reluktanzmotors (10) angepasst ist.

4. Verfahren nach einem der Ansprüche 1 bis 3, **dadurch gekennzeichnet, dass** das U/f-Verhältnis einen statisch-quadratischen Zusammenhang vorsieht.

5. Verfahren nach Anspruch 4, **dadurch gekennzeichnet, dass** die indirekt geregelte Prozessgröße ein Druck, bevorzugt ein Differenzdruck, besonders bevorzugt der Differenzdruck zwischen End- und Saugdruck der Pumpe ist, wobei der Druck idealerweise am Druckstutzen und/oder in einer Druckleitung nahe der Pumpe und/oder am Schlechtpunkt eines Heizungssystems gemessen wird.

6. Pumpe, insbesondere Kreiselpumpe, mit wenigstens einem Synchron-Reluktanzmotor (10) und einem Frequenzumrichter (70) zur Motorsteuerung, **dadurch gekennzeichnet, dass** der Frequenzumrichter (70) ein U/f-Umrichter ist und mit Mitteln zur Durchführung des Verfahrens nach einem der Ansprüche 1-5.

7. Verwendung eines U/f-Umrichters für die Ansteuerung einer Synchron-Reluktanzmaschine gemäß einem Verfahren nach einem der Ansprüche 1 bis 5, vorzugsweise einer Synchron-Reluktanzmaschine zum Antrieb einer Pumpe, insbesondere einer Pumpe gemäß Anspruch 6

8. Verwendung einer Pumpe gemäß Anspruch 6 als Heizungsumwälzpumpe und/oder Brauchwasserzirkulationspumpe und/oder Nassläufer.

## Claims

1. Method for controlling the motor of a synchronous reluctance motor (10) for a pump, in particular centrifugal pump, having a variable-frequency converter (70),
**characterized in that**
the variable-frequency converter (70) controls the synchronous reluctance motor (10) in the volts/hertz operation the setpoint rotational speed for the volts/hertz variable-frequency converter is determined as a function of the actual rotational speed of the motor and/or a process variable which is closed-loop controlled indirectly by means of the rotational speed of the motor, for the use of the pump, wherein the volts/hertz variable-frequency converter interrupts the actuation of the synchronous reluctance motor (10) for a defined time period if loss of synchronism of the motor by means of the actual rotational speed of the motor and/or of the process variable which is closed-loop controlled indirectly is detected.

2. Method according to Claim 1, **characterized in that** the volts/hertz variable-frequency converter operates in the open control circuit.

3. Method according to Claim 1 or 2, **characterized in that** the ratio of the voltage to the frequency of the volts/hertz variable-frequency converter is adapted to the use of the synchronous reluctance motor (10).

4. Method according to one of Claims 1 to 3, **characterized in that** the volts/hertz ratio provides a static-quadratic relationship.

5. Method according to Claim 4, **characterized in that** the process variable which is closed-loop controlled indirectly is a pressure, preferably a differential pressure, particularly preferably the differential pressure between the end pressure and the suction pressure of the pump, wherein the pressure is ideally measured at the pressure connector and/or in a pressure line near to the pump and/or at the index circuit of a heating system.

6. Pump, in particular centrifugal pump, having at least one synchronous reluctance motor (10) and one variable-frequency converter (70) for controlling the motor, **characterized in that** the variable-frequency converter (70) is a volts/hertz variable-frequency converter having means for carrying out the method according to one of Claims 1-5.

7. Use of a volts/hertz variable-frequency converter for actuating a synchronous reluctance machine by a method according to one of Claims 1 to 5, preferably a synchronous reluctance machine for driving a pump, in particular a pump according to Claim 6.

8. Use of a pump according to Claim 6 as a heating circulation pump and/or service water circulation pump and/or wet runner.

## Revendications

1. Procédé de commande de moteur d'un moteur à réluctance synchrone (10) pour une pompe, notamment une pompe centrifuge, comprenant un convertisseur de fréquence (70),
**caractérisé en ce que**
le convertisseur de fréquence (70) commande le moteur à réluctance synchrone (10) en régime U/f, la vitesse de rotation de consigne pour le convertisseur U/f étant déterminée en fonction de la vitesse de rotation réelle du moteur et/ou d'une grandeur de processus de l'application de la pompe régulée indirectement par le biais de la vitesse de rotation du moteur, le convertisseur U/f interrompant l'excitation du moteur à réluctance synchrone (10) pendant une période définie lorsqu'une perte de synchronisme du moteur est reconnue à l'aide de la vitesse de rotation réelle du moteur et/ou de la grandeur de processus régulée indirectement.

2. Procédé selon la revendication 1, **caractérisé en ce que** le convertisseur U/f fonctionne en boucle de régulation ouverte.

3. Procédé selon la revendication 1 ou 2, **caractérisé en ce que** le rapport entre la tension et la fréquence du convertisseur U/f est adapté à l'application du moteur à réluctance synchrone (10).

4. Procédé selon l'une des revendications 1 à 3, **caractérisé en ce que** le rapport U/f prévoit une corrélation statique-quadratique.

5. Procédé selon la revendication 4, **caractérisé en ce que** la grandeur de processus régulée indirectement est une pression, de préférence une pression différentielle, notamment de préférence la pression différentielle entre la pression en sortie et la pression d'aspiration de la pompe, la pression étant idéalement mesurée au niveau du raccord de refoulement et/ou dans une conduite de pression à proximité de la pompe et/ou au point le plus défavorable d'un système de chauffage.

6. Pompe, notamment pompe centrifuge, comprenant au moins un moteur à réluctance synchrone (10) et un convertisseur de fréquence (70) destiné à commander le moteur, **caractérisée en ce que** le convertisseur de fréquence (70) est un convertisseur U/f et comprenant des moyens pour mettre en oeuvre le procédé selon l'une des revendications 1 à 5.

7. Utilisation d'un convertisseur U/f pour l'excitation d'une machine à réluctance synchrone conformément à un procédé selon l'une des revendications 1 à 5, de préférence une machine à réluctance synchrone destinée à entraîner une pompe, notamment une pompe selon la revendication 6.

8. Utilisation d'une pompe selon la revendication 6 en tant que pompe de circulation de chauffage et/ou pompe de circulation d'eau sanitaire et/ou rotor noyé.
